# EUROPEAN PATENT APPLICATION

(11) **EP 3 968 545 A1**
(43) Date of publication of application: **16.03.2022**
(21) Application number: 20823482.3
(22) Date of filing: 07.03.2020
(51) Int. Cl.: H04B 10/032

(54) **FAULT PROTECTION METHOD, DEVICE AND SYSTEM FOR OPTICAL NETWORK**

(30) Priority: 13.06.2019 CN 201910512568
(71) Applicant: Huawei Technologies Co., Ltd., Shenzhen, Guangdong 518129 (CN)
(72) Inventor: HUANG, Shijing, Shenzhen, Guangdong 518129 (CN); SHI, Xianliang, Shenzhen, Guangdong 518129 (CN); SUN, Changsheng, Shenzhen, Guangdong 518129 (CN)
(74) Representative: Gill Jennings & Every LLP
(86) International application number: PCT/CN2020/078317
(87) International publication number: WO 2020/248634

(57) **Abstract**

This application discloses a fault protection method for an optical network. A cross-layer controller connecting an optical network and an IP network sends, to an optical controller in the optical network, an indication that a first optical service in an optical fiber belongs to a first priority and a second optical service in the optical fiber belongs to a second priority. The first priority is related to a feature of the first IP link in the IP network, and the second priority is related to a feature of the second IP link in the IP network. When the optical fiber is faulty, a protected priority of any optical service belonging to the first priority is higher than a protected priority of any optical service belonging to the second priority. In the method, the cross-layer controller sends, to the optical controller, indication information indicating that different optical services belong to different priorities. When the optical network is faulty, the optical controller determines protected sequence of the different optical services based on the priorities. Therefore, random behavior during fault protection for the optical network is avoided, and targeted fault protection is provided for the optical network.

## Description

This application claims priority to Chinese Patent Application No. 201910512568.4, filed with the China National Intellectual Property Administration on June 13, 2019 and entitled "FAULT PROTECTION METHOD, DEVICE, AND SYSTEM FOR OPTICAL NETWORK", which is incorporated herein by reference in its entirety.

### TECHNICAL FIELD

This application relates to the communication field, and in particular, to a fault protection method, device, and system for an optical network.

### BACKGROUND

A communication network includes an optical network and an IP network. The IP network includes IP network devices, and the optical network includes optical transport devices. The IP network device is connected to a corresponding optical transport device, and the optical transport devices are connected to each other through optical fibers. IP services exchanged between the IP network devices are transmitted by using optical signals in the optical fibers. Optical signals transmitted over an optical fiber may correspond to different IP services exchanged between different IP network devices. When the optical fiber is faulty, the optical signals transmitted over the optical fiber need to be switched to another optical fiber, to implement fault protection for the optical network. When resources of the another optical fiber are insufficient, only some of the optical signals transmitted over the faulty optical fiber are switched to the another optical fiber for protection. In the foregoing switching process, optical signals are randomly protected, and targeted fault protection cannot be implemented for the optical network.

### SUMMARY

This application provides a fault protection method, device, and system for an optical network, to resolve a technical problem that targeted fault protection cannot be implemented for the network fault.

According to a first aspect, a fault protection method for an optical network is provided. The optical network includes an optical controller and optical fibers, a first optical service and a second optical service are transmitted over the optical fiber, the first optical service corresponds to an IP service transmitted over a first IP link in an IP network, the second optical service corresponds to an IP service transmitted over a second IP link in the IP network, and a cross-layer controller is connected to the optical network and the IP network. The method includes: The cross-layer controller sends, to the optical controller, an indication that the first optical service belongs to a first priority and the second optical service belongs to a second priority, where the first priority is related to a feature of the first IP link, the second priority is related to a feature of the second IP link, and when the optical fiber is faulty, a protected priority of any optical service belonging to the first priority is higher than a protected priority of any optical service belonging to the second priority.

In the method, the cross-layer controller sends, to the optical controller, indication information indicating that different optical services belong to different priorities. When the optical network is faulty, the optical controller determines a protected sequence of the different optical services based on the priorities. Therefore, random behavior during fault protection for the optical network is avoided, and targeted fault protection is provided for the optical network.

In a possible implementation, the feature of the first IP link includes actual traffic of the IP service transmitted over the first IP link, or a ratio of actual traffic of the IP service transmitted over the first IP link to service bandwidth of the first IP link.

In a possible implementation, the feature of the second IP link includes actual traffic of the IP service transmitted over the second IP link, or a ratio of actual traffic of the IP service transmitted over the second IP link to service bandwidth of the second IP link.

A priority of a corresponding optical service is determined based on actual traffic of an IP service transmitted over an IP link, so that an optical service corresponding to an IP service having larger actual traffic is preferentially protected. In this way, when the optical network is faulty, impact on a transmission effect of the IP network can be minimized.

In a possible implementation, a type of the feature of the first IP link is the same as a type of the feature of the second IP link.

In a possible implementation, the IP network further includes an IP controller, and the method further includes: The cross-layer controller receives the feature of the first IP link and the feature of the second IP link from the IP controller.

According to a second aspect, a fault protection method for an optical network is provided. The optical network includes an optical controller and a first optical fiber, a first optical service and a second optical service are transmitted over the first optical fiber, the first optical service corresponds to an IP service transmitted over a first IP link in an IP network, and the second optical service corresponds to an IP service transmitted over a second IP link in the IP network. The method includes: The optical controller receives an indication that the first optical service belongs to a first priority and the second optical service belongs to a second priority, where when the optical fiber is faulty, a protected priority of any optical service belonging to the first priority is higher than a protected priority of any optical service belonging to the second priority. The optical controller preferentially protects the first optical service belonging to the first priority when the first optical fiber is faulty.

In a possible implementation, the optical network further includes a second optical fiber. That the optical controller preferentially protects the first optical service belonging to the first priority when the first optical fiber is faulty includes: The optical controller switches the first optical service to the second optical fiber for transmission, and issues an indication for discarding the second optical service.

According to a third aspect, a cross-layer controller is provided. The cross-layer controller is configured to perform the method provided in any one of the first aspect or the possible implementations of the first aspect. Correspondingly, the cross-layer controller includes at least one unit configured to perform the steps in the method according to any one of the first aspect or the possible implementations of the first aspect.

According to a fourth aspect, an optical controller is provided. The optical controller is configured to perform the method provided in any one of the second aspect or the possible implementations of the second aspect. Correspondingly, the cross-layer controller includes at least one unit configured to perform the steps in the method according to any one of the second aspect or the possible implementations of the second aspect.

According to a fifth aspect, a cross-layer controller is provided. The cross-layer controller includes a processor, a network interface, and a memory. The network interface may be a transceiver. The memory may be configured to store program code, and the processor is configured to invoke the program code in the memory to perform the method in any one of the first aspect or the possible implementations of the first aspect. Details are not described herein again.

According to a sixth aspect, an optical controller is provided. The optical controller includes a processor, a network interface, and a memory. The network interface may be a transceiver. The memory may be configured to store program code, and the processor is configured to invoke the program code in the memory to perform the method in any one of the second aspect or the possible implementations of the second aspect. Details are not described herein again.

According to a seventh aspect, a network system is provided. The network system includes the cross-layer controller provided in the third aspect and the optical controller provided in the fourth aspect; or the network system includes the cross-layer controller provided in the fifth aspect and the optical controller provided in the sixth aspect.

According to an eighth aspect, a computer storage medium is provided. The computer storage medium is configured to store computer software instructions used by the foregoing cross-layer controller or the foregoing optical controller, and the computer software instructions include programs used to perform the foregoing aspects.

According to a ninth aspect, this application provides a computer program product including computer program instructions. When the computer program product runs on a network device, the network device is enabled to perform the method provided in the first aspect, the second aspect, any possible implementation of the first aspect, or any possible implementation of the second aspect.

### BRIEF DESCRIPTION OF DRAWINGS

To describe technical solutions of this application more clearly, the following briefly describes accompanying drawings used in the embodiments. It is clearly that the accompanying drawings in the following description merely show some embodiments of this application, and a person of ordinary skill in the art can derive other technical solutions and accompanying drawings from the accompanying drawings without creative efforts.
FIG. 1 is a schematic diagram of a network scenario according to an embodiment of the present invention;
FIG. 2 is a schematic flowchart of a fault protection method for an optical network according to an embodiment of the present invention;
FIG. 3 is a schematic diagram of a structure of a cross-layer controller according to an embodiment of the present invention;
FIG. 4 is a schematic diagram of a structure of a cross-layer controller according to an embodiment of the present invention;
FIG. 5 is a schematic diagram of a structure of a cross-layer controller according to an embodiment of the present invention;
FIG. 6 is a schematic diagram of a structure of an optical controller according to an embodiment of the present invention;
FIG. 7 is a schematic diagram of a structure of an optical controller according to an embodiment of the present invention; and
FIG. 8 is a schematic diagram of a structure of an optical controller according to an embodiment of the present invention.

### DESCRIPTION OF EMBODIMENTS

The following describes embodiments of the present invention with reference to accompanying drawings.

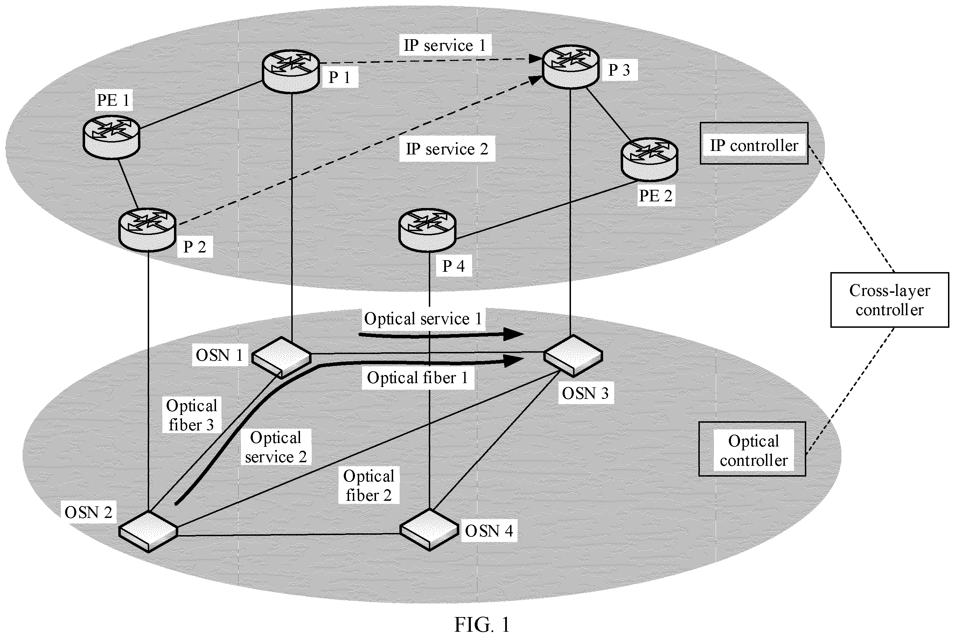

FIG. 1 shows a possible application scenario according to an embodiment of the present invention. The application scenario includes an IP network and an optical network. The IP network includes an IP controller and several IP network devices. The IP controller may be an IP network management device or a controller in a software-defined networking (software-defined networking, SDN) architecture. The IP network device may be a router, for example, a PE 1, a PE 2, a P 1, a P 2, a P 3, and a P 4. The PE 1 and the PE 2 are, for example, provider edge (provider edge, PE) routers of a service provider network, and the P 1, the P 2, the P 3, and P 4 are, for example, provider (provider, P) routers of the service provider network. The optical network includes an optical controller (optical controller) and several optical network devices. The optical controller may be an optical network management device. The optical network device may be an optical switch node (optical switch node, OSN), for example, an OSN 1, an OSN 2, an OSN 3, and an OSN 4. In addition, a cross-layer controller implements cross-layer collaboration between the IP network and the optical network. The cross-layer controller may be a cross-layer management device of the IP network and the optical network. The backbone routers are connected to the optical switch nodes. For example, each backbone router is connected to a corresponding optical switch node through an optical fiber pigtail.

In this application scenario, the PE 1 and the PE 2 receive communication data from a customer edge (customer edge, CE), and send the communication data to the backbone routers. For example, the PE 1 may send the communication data to the P 1 and the P 2, and the PE 2 may send the communication data to the P 3 and the P 4. Further, the communication data between the backbone router devices is transmitted by transmitting optical signals in optical fibers. The communication data is transmitted hop by hop (hop) in a form of data packets in the IP network. An IP link exists between a router and a next-hop router of the router. A sum of data packets transmitted over the IP link may be referred to as an IP service. For example, there is an IP link 1 between the P 1 and the P 3, where an IP service 1 is transmitted over the IP link 1; and there is an IP link 2 between the P 2 and the P 3, where an IP service 2 is transmitted over the IP link 2. For example, in a transmission process of the IP service 1, the P 1 sends data packets of the IP service 1 to the OSN 1 through an optical fiber pigtail. The OSN 1 converts the data packets of the IP service 1 into optical signals. The optical signals obtained by converting the IP service 1 are an optical service 1 corresponding to the IP service 1. The OSN 1 transmits the optical service 1 to the OSN 3 through an optical fiber 1 between the OSN 1 and the OSN 3. After the optical service 1 arrives at the OSN 3, the OSN 3 converts the optical signals into the data packets and sends the data packets to the P 3 through an optical fiber pigtail between the OSN 3 and the P 3. The P 3 receives the data packets, in other words, transmission of the IP service 1 is completed. A transmission path of the optical service 1 in the optical network is from the OSN 1 to the OSN 3 through the optical fiber 1. For example, in a transmission process of the IP service 2, the P 2 sends data to the OSN 2 through an optical fiber pigtail. The OSN 2 converts data signals into optical signals, namely, an optical service 2, and sends the optical service 2 to the OSN 1 through an optical fiber 3 between the OSN 2 and the OSN 1. Then, the OSN 1 sends the optical service 2 to the OSN 3 through the optical fiber 1 between the OSN 1 and the OSN 3. After the optical service 1 arrives at the OSN 3, the OSN 3 converts the optical signals into the data signals and sends the data signals to the P 3 through the optical fiber pigtail between the OSN 3 and the P 3. The P 3 receives the data, in other words, transmission of the IP service 2 is completed. A transmission path of the optical service 2 in the optical network is from the OSN 2 to the OSN 1 through the optical fiber 3, and then from the OSN 1 to the OSN 3 through the optical fiber 1. It can be learned that an optical layer path of the optical service 1 corresponding to the IP service 1 and an optical layer path of the optical service 2 corresponding to the IP service 2 both include the optical fiber 1. In other words, optical services transmitted over an optical fiber may correspond to different IP services exchanged between different IP network devices.

When the optical fiber is faulty, all the optical services transmitted over the optical fiber are affected. The optical controller recalculates transmission paths in the optical network for the optical services. The recalculated transmission paths may be referred to as optical layer paths. For example, when the optical fiber 1 is faulty, both the optical service 1 and the optical service 2 are affected, and the optical controller recalculates the optical layer paths for the optical service 1 and the optical service 2. For example, the optical layer path recalculated by the optical controller for the optical service 1 is from the OSN 1 to the OSN 2 through the optical fiber 3, and then from the OSN 2 to the OSN 3 through the optical fiber 2. The optical layer path recalculated by the optical controller for the optical service 2 is from the OSN 2 to the OSN 3 through the optical fiber 2. It can be learned that the recalculated optical layer path for the optical service 1 and the recalculated optical layer path for the optical service 2 both include the optical fiber 2. However, resources of the optical network may be insufficient. Each optical service has a specific service bandwidth. The service bandwidth may be a service bandwidth in a service model and is associated with a service type. For example, a service bandwidth of the optical service 1 is 10 G, and a service bandwidth of the optical service 2 is 10 G. Each optical fiber also has a bandwidth capability, and the bandwidth capability may be a sum of service bandwidths that can be transmitted by the optical fiber. A sum of service bandwidths of all optical services actually transmitted by the optical fiber needs to be less than or equal to the bandwidth capability of the optical fiber. In addition, when some optical services have been transmitted over the optical fiber, a remaining bandwidth capability of the optical fiber is the bandwidth capability of the optical fiber minus service bandwidths of the transmitted optical services. Obviously, a size comparison relationship between the remaining bandwidth capability of the optical fiber and service bandwidths of to-be-transmitted optical services determines whether the to-be-transmitted optical services can be transmitted over the optical fiber. For example, a remaining bandwidth capability of the optical fiber 2 is only 15 G, which is less than a sum of service bandwidths of the optical service 1 and the optical service 2, namely, 20 G. In this case, only one of the optical service 1 and the optical service 2 can be successfully switched to the optical fiber 2 for transmission. If an optical service that is successfully switched is randomly selected, targeted fault protection cannot be implemented for the optical network. For example, the IP service 1 corresponding to the optical service 1 and the IP service 2 corresponding to the optical service 2 may have different actual traffic, and the actual traffic may be a sum of communication data actually transmitted over the IP link. The actual traffic of the IP service 1 is 6 G and the actual traffic of the IP service 2 is 2 G. If the optical service that is successfully switched and that is randomly selected is the optical service 2, the optical service 1 fails to be switched to the optical fiber 2. For the optical service 1 that cannot be successfully switched, the optical controller may not attempt to recalculate the optical layer path for the optical service 1, so that transmission of the optical service 1 is interrupted. However, compared with the IP service 2 corresponding to the optical service 2, the IP service 1 corresponding to the optical service 1 has the higher actual traffic, and may involve more applications or more users. Therefore, transmission interruption of the optical service 1 affects a network transmission effect to a greater extent.

The embodiments of the present invention provide a fault protection method for the optical network, and a device and a system based on the method. The method, the device, and the system are based on a same inventive concept. Principles of resolving problems by the method, the device, and the system are similar. Therefore, mutual reference may be made to the embodiments of the method, the device, and the system, and same or similar content is not described herein.

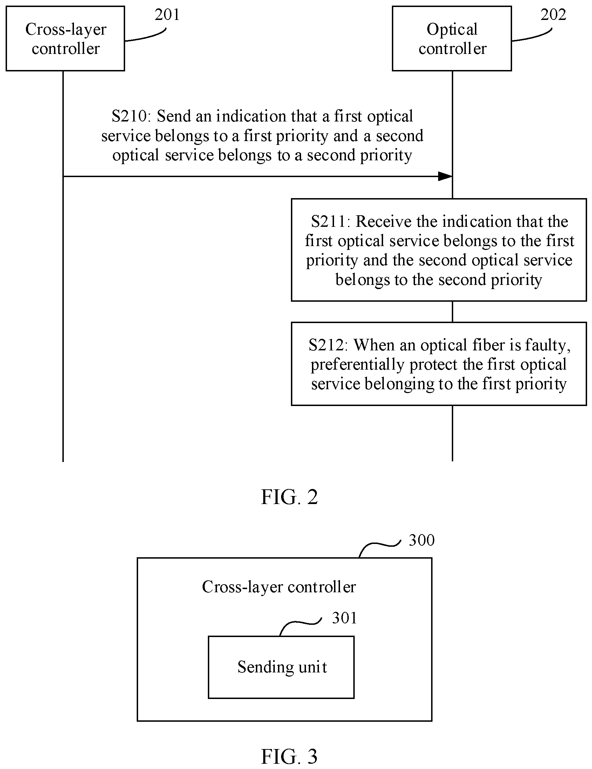

Refer to FIG. 2. An embodiment of the present invention provides a fault protection method for an optical network. In the method, a cross-layer controller sends, to an optical controller, indication information indicating that different optical services belong to different priorities. When the optical network is faulty, the optical controller determines a protected sequence of the different optical services based on the priorities. Therefore, random behavior during fault protection for the optical network is avoided, and targeted fault protection is provided for the optical network. In the method, the optical network includes the optical controller 202 and optical fibers, a first optical service and a second optical service are transmitted over the optical fiber, the first optical service corresponds to an IP service transmitted over a first IP link in an IP network, the second optical service corresponds to an IP service transmitted over a second IP link in the IP network, and the cross-layer controller 201 is connected to the optical network and the IP network. The method includes the following steps.

S210: The cross-layer controller 201 sends, to the optical controller 202, an indication that the first optical service belongs to a first priority and the second optical service belongs to a second priority. The first priority is related to a feature of the first IP link, and the second priority is related to a feature of the second IP link. When the optical fiber is faulty, a protected priority of any optical service belonging to the first priority is higher than a protected priority of any optical service belonging to the second priority.

In an example, that the first optical service corresponds to an IP service transmitted over a first IP link in an IP network may mean that the IP service transmitted over the first IP link is converted into optical signals, and the optical signals are the first optical service. That the second optical service corresponds to an IP service transmitted over a second IP link in the IP network may mean that the IP service transmitted over the second IP link is converted into optical signals, and the optical signals are the second optical service. With reference to the application scenario shown in FIG. 1, the cross-layer controller 201 may be the cross-layer controller in FIG. 1, and the optical controller 202 may be the optical controller in FIG. 1. The optical fiber may be the optical fiber 1, the first optical service may be the optical service 1, the second optical service may be the optical service 2, and the optical fiber 1 transmits the optical service 1 and the optical service 2. The first IP link may be the IP link between the P 1 and the P 3, the IP service transmitted over the first IP link, namely, the IP service 1, is converted into the optical signals, and a sum of the optical signals is the optical service 1. The second IP link may be the IP link between the P 2 and the P 3, the IP service transmitted over the second IP link, namely, the IP service 2, is converted into the optical signals, and a sum of the optical signals is the optical service 2.

In an example, the feature of the first IP link includes actual traffic of the IP service transmitted over the first IP link, or a percentage of actual traffic of the IP service transmitted over the first IP link to a service bandwidth of the first IP link. In an example, the feature of the first IP link is the actual traffic of the IP service transmitted over the first IP link, or the feature of the first IP link is the percentage of the actual traffic of the IP service transmitted over the first IP link to the service bandwidth of the first IP link. For example, the actual traffic of the IP service 1 is 6 G, and the feature of the first IP link is the actual traffic of the IP service 1. Therefore, the feature of the first IP link is 6 G. Alternatively, for example, the actual traffic of the IP service 1 is 6 G, and the service bandwidth of the first IP link is 10 G. Therefore, the feature of the first IP link is the percentage of the actual traffic of the IP service 1 to the service bandwidth of the first IP link, namely, 60%.

In an example, the feature of the second IP link includes actual traffic of the IP service transmitted over the second IP link, or a percentage of actual traffic of the IP service transmitted over the second IP link to a service bandwidth of the second IP link. In an example, the feature of the second IP link is the actual traffic of the IP service transmitted over the second IP link, or the feature of the second IP link is the percentage of the actual traffic of the IP service transmitted over the second IP link to the service bandwidth of the second IP link. For example, the actual traffic of the IP service 2 is 2 G, and the feature of the second IP link is the actual traffic of the IP service 2. Therefore, the feature of the second IP link is 2 G. Alternatively, for example, the actual traffic of the IP service 2 is 2 G, and the service bandwidth of the second IP link is 10 G. Therefore, the feature of the second IP link is the percentage of the actual traffic of the IP service 2 to the service bandwidth of the second IP link, namely, 20%.

In an example, a type of the feature of the first IP link is the same as a type of the feature of the second IP link. For example, the feature of the first IP link is the actual traffic of the IP service 1, the feature of the second IP link is the actual traffic of the IP service 2, and the type of the feature of the first IP link is the same as the type of the feature of the second IP link.

In an example, the IP network further includes an IP controller, and the cross-layer controller 201 receives the feature of the first IP link and the feature of the second IP link from the IP controller. With reference to the application scenario shown in FIG. 1, the IP controller may be the IP controller in FIG. 1. The IP controller obtains the feature of the first IP link and the feature of the second IP link, and sends the feature of the first IP link and the feature of the second IP link to the cross-layer controller 201.

In an example, the cross-layer controller obtains a priority policy, where the priority policy includes a correspondence between a value range of a link feature and a priority. For example, the priority policy includes a correspondence between a first value range and the first priority, and a correspondence between a second value range and the second priority. The cross-layer controller determines that the feature of the first IP link falls within the first value range, and further determines that a priority of the first optical service is the first priority. The cross-layer controller determines that the feature of the second IP link falls within the second value range, and further determines that a priority of the second optical service is the second priority. For example, the priority policy is shown in FIG. 1. The priority policy includes the correspondence between the value range of the link feature and the priority. Specifically, the first value range is greater than or equal to 3 G and corresponds to the first priority, the second value range is greater than or equal to 1 G and less than 3 G and corresponds to the second priority, and a third value range is less than 1 G and corresponds to a third priority. The feature of the first IP link is the actual traffic of the IP service 1, and the feature of the first IP link is 6 G. The feature of the second IP link is the actual traffic of the IP service 2, and the feature of the second IP link is 2 G. The cross-layer controller determines that the feature of the first IP link is 6 G and falls within the first value range, and further determines that the priority of the first optical service is the first priority, that is, the first priority depends on the feature of the first IP link. The cross-layer controller determines that the feature of the second IP link is 2 G and falls within the second value range, and further determines that the priority of the second optical service is the second priority, that is, the second priority depends on the feature of the second IP link.

**Table 1**

| Level of a link feature | Priority |
|---|---|
| Greater than or equal to 3 G | First priority |
| Greater than or equal to 1 G and less than 3 G | Second priority |
| Less than 1 G | Third priority |

S211: The optical controller 202 receives the indication that the first optical service belongs to the first priority and the second optical service belongs to the second priority, where when the optical fiber is faulty, a protected priority of any optical service belonging to the first priority is higher than a protected priority of any optical service belonging to the second priority.

In an example, a sequence of a protected priority of the first priority and a protected priority of the second priority is determined based on a sequence number. For example, a priority with a smaller sequence number is preferentially protected. In other words, the protected priority of the first priority is higher than the second priority. Certainly, a priority with a larger sequence number may alternatively be preferentially protected. In other words, the protected priority of the second priority is higher than the first priority. A sorting policy for determining the sequence of the protected priorities based on the sequence number may be completed in advance by using network configuration, or received by the optical controller 202 at any time. For example, the optical controller receives the indication that the first optical service belongs to the first priority and the second optical service belongs to the second priority and the sorting policy at the same time.

S212: When the optical fiber is faulty, the optical controller 202 preferentially protects the first optical service belonging to the first priority.

In an example, when the optical fiber is faulty, the optical controller 202 implements protection by switching the optical service transmitted over the optical fiber to another optical fiber for transmission. In some cases, for example, when a remaining bandwidth capability of the another optical fiber is insufficient, the optical controller 202 switches the first optical service to a second optical fiber for transmission, and discards the second optical service. With reference to the application scenario shown in FIG. 1, when the optical fiber 1 is faulty, the optical controller recalculates the optical layer paths for the optical service 1 and the optical service 2, and the recalculated optical layer paths all include the optical fiber 2. When the service bandwidth of the optical service 1 and the service bandwidth of the optical service 2 are both 10 G, and the remaining bandwidth capability of the optical fiber 2 is 15 G, the remaining bandwidth capability of the optical fiber 2 is insufficient to support switching of both the optical service 1 and the optical service 2 to the optical fiber 2 for transmission. In this case, the optical controller preferentially protects the optical service 1 belonging to the first priority. The optical controller switches the optical service 1 to the optical fiber 2 for transmission. The optical controller may discard the optical service 2.

FIG. 3 is a possible schematic diagram of a structure of a cross-layer controller in the foregoing embodiments. The cross-layer controller 300 may implement a function of the cross-layer controller 201 in the embodiment shown in FIG. 2. Refer to FIG. 3. The cross-layer controller 300 includes a sending unit 301. The unit may perform a corresponding function of the cross-layer controller in the foregoing method examples.

For example, the sending unit 301 is configured to send, to an optical controller, an indication that a first optical service belongs to a first priority and a second optical service belongs to a second priority, where the first priority is related to a feature of a first IP link, the second priority is related to a feature of a second IP link, and when an optical fiber is faulty, a protected priority of the first optical service belonging to the first priority is higher than a protected priority of the second optical service belonging to the second priority.

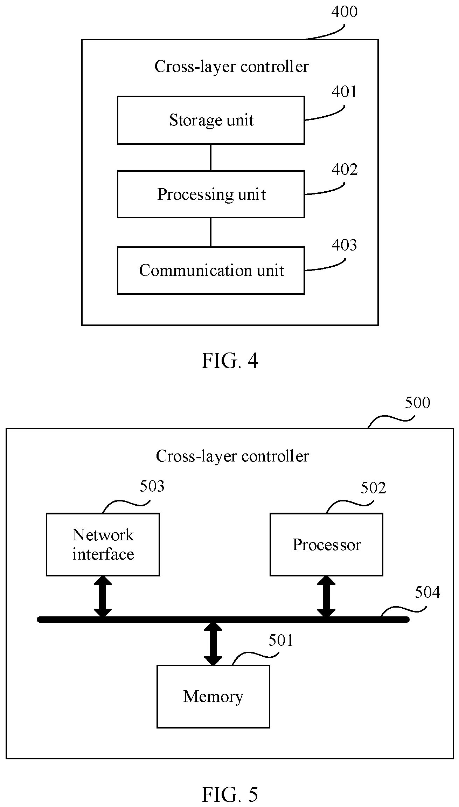

When an integrated unit is used, FIG. 4 is another possible schematic diagram of a structure of a cross-layer controller in the foregoing embodiment. The cross-layer controller 400 may implement a function of the cross-layer controller 201 in the embodiment shown in FIG. 2.

The cross-layer controller 400 includes a storage unit 401, a processing unit 402, and a communication unit 403. The processing unit 402 is configured to control and manage an action of the cross-layer controller 400. For example, the processing unit 402 is configured to support the cross-layer controller 400 to perform the process S210 in FIG. 2, and/or another process of the technology described in this specification. The communication unit 403 is configured to support communication between the cross-layer controller 400 and another network entity, for example, communication between the cross-layer controller 400 and the optical controller 202 in the embodiment shown in FIG. 2. The storage unit 401 is configured to store program code and data of the cross-layer controller 400.

The storage unit 401 may be a memory, for example, a random access memory (random access memory, RAM), a flash memory, a read-only memory (read-only memory, ROM), an erasable programmable read-only memory (erasable programmable ROM, EPROM), an electrically erasable programmable read-only memory (electrically erasable EPROM, EEPROM), a hard disk, a removable hard disk, an optical disc, or any other form of storage medium well known in the art. For example, the storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network node. Certainly, the processor and the storage medium may exist in the network node as discrete components.

The processing unit 402 may be a processor, for example, a central processing unit (central processing unit, CPU), a digital signal processor (digital signal processor, DSP), an application-specific integrated circuit (application-specific integrated circuit, ASIC), a programmable logic device (for example, a field programmable gate array (field programmable gate array, FPGA)), a transistor logic device, or any combination thereof. The processing unit 402 may implement or execute various example logical blocks, modules, and circuits described with reference to content disclosed in the embodiments of the present invention. The communication unit 403 may be a network interface, and the storage unit 401 may be a memory.

When the processing unit 402 is the processor, the communication unit 403 is the network interface, and the storage unit 401 is the memory, the cross-layer controller in this embodiment of the present invention may be a cross-layer controller 500 shown in FIG. 5.

FIG. 5 is another possible schematic diagram of a structure of the cross-layer controller in the foregoing embodiments. The cross-layer controller 500 includes a processor 502, a network interface 503, and a memory 501.

The memory 501 is configured to store instructions. When the embodiment shown in FIG. 3 is implemented and the units described in the embodiment of FIG. 3 are implemented by using software, software or program code required for performing a function of the sending unit 301 in FIG. 3 is stored in the memory 501.

The processor 502 is configured to execute the instructions in the memory 501, to perform the foregoing fault protection method applied to the optical network in the embodiment shown in FIG. 2.

The network interface 503 is configured to perform communication.

The network interface 503 may be an Ethernet (Ethernet) interface, a wireless local area network interface, or the like.

The network interface 503, the processor 502, and the memory 501 may be connected to each other through a bus. The bus may be a peripheral component interconnect (Peripheral Component Interconnect, PCI for short) bus, an extended industry standard architecture (Extended industry Standard Architecture, EISA for short) bus, or the like. The bus may be classified into an address bus, a data bus, a control bus, and the like. For ease of representation, only one thick line is used to represent the bus in FIG. 5, but this does not mean that there is only one bus or only one type of bus.

In a specific embodiment, the processor 502 is configured to send, to an optical controller, an indication that a first optical service belongs to a first priority and a second optical service belongs to a second priority, where the first priority is related to a feature of a first IP link, the second priority is related to a feature of a second IP link, and when an optical fiber is faulty, a protected priority of any optical service belonging to the first priority is higher than a protected priority of any optical service belonging to the second priority. For a detailed processing process of the processor 502, refer to the detailed description of the process S210 in the embodiment shown in FIG. 2. Details are not described herein again.

The network interface 503 is configured to send the indication by the cross-layer controller by using a network system. For a specific process, refer to the detailed description of S210 in the embodiment shown in FIG. 2. Details are not described herein again.

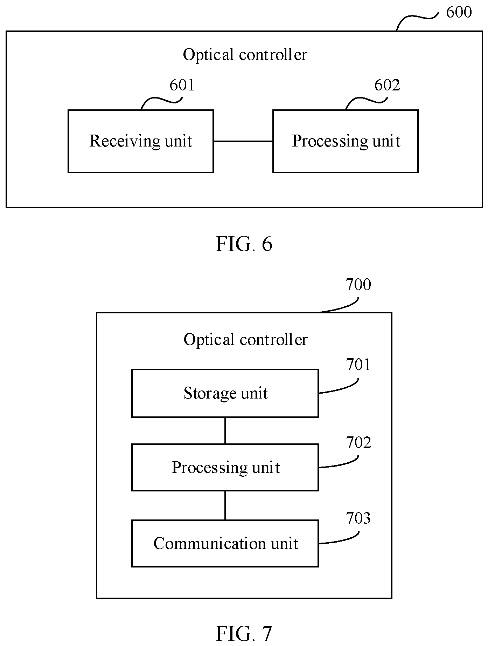

FIG. 6 is a possible schematic diagram of a structure of an optical controller in the foregoing embodiments. The optical controller 600 may implement a function of the optical controller 202 in the embodiment shown in FIG. 2. Refer to FIG. 6. The optical controller 600 includes a receiving unit 601 and a processing unit 602. The units may perform corresponding functions of the optical controller in the foregoing method examples.

For example, the receiving unit 601 is configured to receive an indication that a first optical service belongs to a first priority and a second optical service belongs to a second priority, where when an optical fiber is faulty, a protected priority of any optical service belonging to the first priority is higher than a protected priority of any optical service belonging to the second priority.

The processing unit 602 is configured to preferentially protect the first optical service belonging to the first priority when a first optical fiber is faulty.

When an integrated unit is used, FIG. 7 is another possible schematic diagram of a structure of an optical controller in the foregoing embodiments. The optical controller 700 may implement a function of the optical controller 202 in the embodiment shown in FIG. 2.

The optical controller 700 includes a storage unit 701, a processing unit 702, and a communication unit 703. The processing unit 702 is configured to control and manage an action of the optical controller 700. For example, the processing unit 702 is configured to support the optical controller 700 to perform the processes S211 and S212 in FIG. 2, and/or another process of the technology described in this specification. The communication unit 703 is configured to support communication between the optical controller 700 and another network entity, for example, communication between the optical controller 700 and the cross-layer controller 202 in the embodiment shown in FIG. 2. The storage unit 701 is configured to store program code and data of the optical controller 700.

The storage unit 701 may be a memory, for example, a random access memory (random access memory, RAM), a flash memory, a read-only memory (read-only memory, ROM), an erasable programmable read-only memory (erasable programmable ROM, EPROM), an electrically erasable programmable read-only memory (electrically erasable EPROM, EEPROM), a hard disk, a removable hard disk, an optical disc, or any other form of storage medium well known in the art. For example, the storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network node. Certainly, the processor and the storage medium may exist in the network node as discrete components.

The processing unit 702 may be a processor, for example, a CPU, a digital signal processor (digital signal processor, DSP), an application-specific integrated circuit (application-specific integrated circuit, ASIC), a programmable logic device (for example, a field programmable gate array (field programmable gate array, FPGA)), a transistor logic device, or any combination thereof. The processing unit 702 may implement or execute various example logical blocks, modules, and circuits described with reference to content disclosed in the embodiments of the present invention. The processor may alternatively be a combination of processors implementing a computing function, for example, a combination of one or more microprocessors, or a combination of the DSP and a microprocessor. The communication unit 703 may be a network interface, and the storage unit 701 may be a memory.

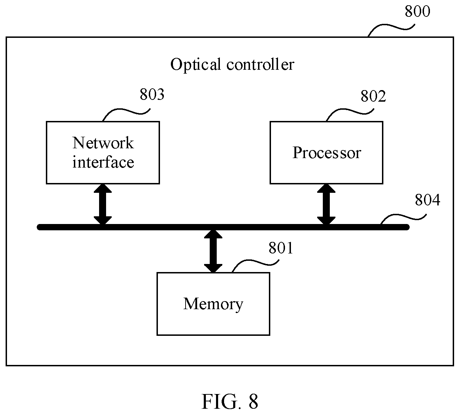

When the processing unit 702 is the processor, the communication unit 703 is the network interface, and the storage unit 701 is the memory, the optical controller in this embodiment of the present invention may be an optical controller 800 shown in FIG. 8.

FIG. 8 is another possible schematic diagram of a structure of an optical controller in the foregoing embodiments. The optical controller 800 includes a processor 802, a network interface 803, a memory 801, and a bus 804.

The memory 801 is configured to store instructions. When the embodiment shown in FIG. 6 is implemented and the units described in the embodiment of FIG. 6 are implemented by using software, software or program code required for performing a function of the receiving unit 601 and the processing unit 602 in FIG. 6 is stored in the memory 801.

The processor 802 is configured to execute the instructions in the memory 801, to perform the foregoing fault protection method applied to the optical network in the embodiment shown in FIG. 2.

The network interface 803 is configured to perform communication.

The network interface 803 may be an Ethernet (Ethernet) interface, a wireless local area network interface, or the like.

The network interface 803, the processor 802, and the memory 801 are connected to each other through a bus 804. The bus 804 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 5, but this does not mean that there is only one bus or only one type of bus.

In a specific embodiment, the processor 802 is configured to: receive an indication that a first optical service belongs to a first priority and a second optical service belongs to a second priority, where when an optical fiber is faulty, a protected priority of any optical service belonging to the first priority is higher than a protected priority of any optical service belonging to the second priority; and preferentially protect the first optical service belonging to the first priority when a first optical fiber is faulty. For a detailed processing process of the processor 802, refer to the detailed description of the processes S211 and S212 in the embodiment shown in FIG. 2. Details are not described herein again.

The network interface 803 is configured to send and receive the indication by the optical controller by using a network system. For a specific process, refer to the detailed description of S211 in the embodiment shown in FIG. 2. Details are not described herein again.

An embodiment of the present invention further provides a network system, where the network system includes an optical network, an IP network, and a cross-layer controller. The cross-layer controller is connected to the optical network and the IP network, the optical network includes an optical controller and optical fibers, a first optical service and a second optical service are transmitted over the optical fiber, the first optical service corresponds to an IP service transmitted over a first IP link in the IP network, and the second optical service corresponds to an IP service transmitted over a second IP link in the IP network. The cross-layer controller in the network system may perform processing steps of the cross-layer controller 201 in the embodiment shown in FIG. 2, and the optical controller in the network system may perform processing steps of the optical controller 202 in the embodiment shown in FIG. 2. Correspondingly, the cross-layer controller in the network system may be the cross-layer controller 300 in the embodiment shown in FIG. 3, and the optical controller may be the optical controller 600 in the embodiment shown in FIG. 6. Alternatively, correspondingly, the cross-layer controller in the network system may be the cross-layer controller 400 in the embodiment shown in FIG. 4, and the optical controller may be the optical controller 700 in the embodiment shown in FIG. 7. Alternatively, correspondingly, the cross-layer controller in the network system may be the cross-layer controller 500 in the embodiment shown in FIG. 5, and the optical controller may be the optical controller 800 in the embodiment shown in FIG. 8.

Specifically, the cross-layer controller is configured to send, to the optical controller, an indication that a first optical service belongs to a first priority and a second optical service belongs to a second priority, where the first priority is related to a feature of a first IP link, and the second priority is related to a feature of a second IP link, and when the optical fiber is faulty, a protected priority of any optical service belonging to the first priority is higher than a protected priority of any optical service belonging to the second priority.

The optical controller is configured to: receive the indication that the first optical service belongs to the first priority and the second optical service belongs to the second priority and preferentially protect the first optical service belonging to the first priority when the optical fiber is faulty.

An embodiment of the present invention further provides a non-transient storage medium, configured to store software instructions used in the foregoing embodiments. The non-transient storage medium includes a program used to perform the methods shown in the foregoing embodiments. When the program is executed on a computer or a network device, the computer or the network device is enabled to perform the methods in the foregoing method embodiments.

An embodiment of this present invention further provides a computer program product including computer program instructions. When the computer program product runs on a network device, the network device is enabled to perform the methods in the foregoing method embodiments.

In this embodiment of the present invention, "first" in the first optical network device, the first IP network device, the first IP link, the first optical fiber, the first optical service, and the first priority is merely used for name identification, and does not represent the first in a sequence. The rule is also applicable to "second", "third", and the like.

It should be noted that any apparatus embodiment described above is merely an example. The units described as separate parts may or may not be physically separate, and parts displayed as units may or may not be physical units, that is, may be located in one position, or may be distributed on a plurality of network units. Some or all of the modules may be selected based on an actual requirement to achieve the objectives of the solutions of the embodiments. In addition, in the accompanying drawings of the network node embodiments provided by the present invention, connection relationships between modules indicate that the modules have communication connections with each other, which may be specifically implemented as one or more communication buses or signal cables. A person of ordinary skill in the art may understand and implement the embodiments of the present invention without creative efforts.

The objectives, technical solutions, and benefits of the present invention are further described in detail in the foregoing specific embodiments. It should be understood that the foregoing description is merely a specific embodiment of the present invention, but are not intended to limit the protection scope of the present invention. Any modification, equivalent replacement, improvement, or the like made based on the technical solutions of the present invention shall fall within the protection scope of the present invention.

## Claims

1. A fault protection method for an optical network, wherein the optical network comprises an optical controller and an optical fiber, a first optical service and a second optical service are transmitted over the optical fiber, the first optical service corresponds to an IP service transmitted over a first IP link in an IP network, the second optical service corresponds to an IP service transmitted over a second IP link in the IP network, a cross-layer controller is connected to the optical network and the IP network, and the method comprises:
sending, by the cross-layer controller to the optical controller, an indication that the first optical service belongs to a first priority and the second optical service belongs to a second priority, wherein the first priority is related to a feature of the first IP link, the second priority is related to a feature of the second IP link, and when the optical fiber is faulty, a protected priority of any optical service belonging to the first priority is higher than a protected priority of any optical service belonging to the second priority.

2. The method according to claim 1, wherein the feature of the first IP link comprises actual traffic of the IP service transmitted over the first IP link, or a ratio of actual traffic of the IP service transmitted over the first IP link to service bandwidth of the first IP link.

3. The method according to claim 1 or 2, wherein the feature of the second IP link comprises actual traffic of the IP service transmitted over the second IP link, or a ratio of actual traffic of the IP service transmitted over the second IP link to service bandwidth of the second IP link.

4. The method according to any one of claims 1 to 3, wherein a type of the feature of the first IP link is the same as a type of the feature of the second IP link.

5. The method according to any one of claims 1 to 4, wherein the IP network further comprises an IP controller, and the method further comprises:
receiving, by the cross-layer controller, the feature of the first IP link and the feature of the second IP link from the IP controller.

6. A fault protection method for an optical network, wherein the optical network comprises an optical controller and a first optical fiber, a first optical service and a second optical service are transmitted over the first optical fiber, the first optical service corresponds to an IP service transmitted over a first IP link in an IP network, the second optical service corresponds to an IP service transmitted over a second IP link in the IP network, and the method comprises:
receiving, by the optical controller, an indication that the first optical service belongs to a first priority and the second optical service belongs to a second priority, wherein when the optical fiber is faulty, a protected priority of any optical service belonging to the first priority is higher than a protected priority of any optical service belonging to the second priority; and
preferentially protecting, by the optical controller, the first optical service belonging to the first priority when the first optical fiber is faulty.

7. The method according to claim 6, wherein the optical network further comprises a second optical fiber, and the preferentially protecting, by the optical controller, the first optical service belonging to the first priority when the first optical fiber is faulty comprises:
switching, by the optical controller, the first optical service to the second optical fiber for transmission; and
issuing, by the optical controller, an indication for discarding the second optical service.

8. A cross-layer controller, wherein the cross-layer controller is connected to an optical network and an IP network, the optical network comprises an optical controller and an optical fiber, a first optical service and a second optical service are transmitted over the optical fiber, the first optical service corresponds to an IP service transmitted over a first IP link in the IP network, and the second optical service corresponds to an IP service transmitted over a second IP link in the IP network, wherein the cross-layer controller comprises:
a sending unit, configured to send, to the optical controller, an indication that the first optical service belongs to a first priority and the second optical service belongs to a second priority, wherein the first priority is related to a feature of the first IP link, the second priority is related to a feature of the second IP link, and when the optical fiber is faulty, a protected priority of any optical service belonging to the first priority is higher than a protected priority of any optical service belonging to the second priority.

9. The cross-layer controller according to claim 8, wherein the IP network further comprises an IP controller, and the cross-layer controller further comprises:
a receiving unit, configured to receive the feature of the first IP link and the feature of the second IP link from the IP controller.

10. An optical controller, wherein the optical controller is located in an optical network, the optical network further comprises a first optical fiber, a first optical service and a second optical service are transmitted over the first optical fiber, the first optical service corresponds to an IP service transmitted over a first IP link in an IP network, and the second optical service corresponds to an IP service transmitted over a second IP link in the IP network, wherein the optical controller comprises:
a receiving unit, configured to receive an indication that the first optical service belongs to a first priority and the second optical service belongs to a second priority, wherein when the optical fiber is faulty, a protected priority of any optical service belonging to the first priority is higher than a protected priority of any optical service belonging to the second priority; and
a processing unit, configured to preferentially protect the first optical service belonging to the first priority when the first optical fiber is faulty.

11. The optical controller according to claim 10, wherein the optical fiber further comprises a second optical fiber; and
the processing unit is further configured to: switch the first optical service to the second optical fiber for transmission, and issue an indication for discarding the second optical service.

12. A network system, wherein the network system comprises an optical network and a cross-layer controller, the cross-layer controller is connected to the optical network and an IP network, the optical network comprises an optical controller and an optical fiber, a first optical service and a second optical service are transmitted over the optical fiber, the first optical service corresponds to an IP service transmitted over a first IP link in the IP network, and the second optical service corresponds to an IP service transmitted over a second IP link in the IP network, wherein
the cross-layer controller is configured to send, to the optical controller, an indication that the first optical service belongs to a first priority and the second optical service belongs to a second priority, wherein the first priority is related to a feature of the first IP link, and the second priority is related to a feature of the second IP link, and when the optical fiber is faulty, a protected priority of any optical service belonging to the first priority is higher than a protected priority of any optical service belonging to the second priority; and
the optical controller is configured to: receive an indication that the first optical service belongs to the first priority and the second optical service belongs to the second priority, and preferentially protect the first optical service belonging to the first priority when the optical fiber is faulty.

13. The network system according to claim 12, wherein the optical network further comprises a first optical network device and a second optical network device, and the first optical network device is connected to the second optical network device through the optical fiber.

14. The network system according to claim 12 or 13, wherein the network system further comprises the IP network, the IP network comprises a first IP network device and a second IP network device, the first optical network device is connected to the first IP network device, and the second optical network device is connected to the second IP network device.

15. A computer-readable medium comprising instructions, wherein when the instructions are executed on a computer, the computer is enabled to perform the method according to any one of claims 1 to 7.
